# EUROPÄISCHE PATENTSCHRIFT

(11) **EP 0 915 599 B1**
(45) Veröffentlichungstag und Bekanntmachung des Hinweises auf die Patenterteilung: **11.10.2006**
(21) Anmeldenummer: 98119350.1
(22) Anmeldetag: 14.10.1998
(51) Int. Cl.: H04L 29/06, H04L 12/40, G06F 13/40

(54) **Anschlussvorrichtung zum Ankoppeln mindestens zweier Bussysteme**
Connection device for coupling at least two bus systems
Dispositif de connexion pour le couplage d'au moins deux systèmes de bus

(30) Priorität: 06.11.1997 DE 19748979
(43) Veröffentlichungstag der Anmeldung: 12.05.1999
(73) Patentinhaber: ROBERT BOSCH GMBH, 70442 Stuttgart (DE)
(72) Erfinder: Pruellage, Arno, 76187 Karlsruhe (DE)

(56) Entgegenhaltungen:
- EP-A- 0 507 428
- EP-A- 0 577 435
- DE-A- 4 110 372
- DE-A- 19 815 258
- SZYDLOWSKI C: "A GATEWAY FOR CAN SPECIFICATION 2.0 NON-PASSIVE DEVICES" SAE TECHNICAL PAPER SERIES, 1. Januar 1993 (1993-01-01), Seiten 29-36, XP002062365

## Beschreibung

### Stand der Technik

Die Erfindung bezieht sich auf eine Anschlußvorrichtung zum Ankoppeln mindestens zweier Bussysteme an verschiedenen Anschlüssen eines Gateway.

Bei derartigen Anschlußvorrichtungen werden bisher farblich oder mechanisch oder auch elektrisch codierte Stecker verwendet, die mit fest darauf abgestimmten Anschlüssen eines Gateway (Übergangseinrichtung, zentrales Steuerungsgerät zwischen Bussystemen) verbunden werden. Wegen der verschiedenen Anschlüsse und der darauf abgestimmten Stecker ist der Fertigungsaufwand relativ hoch, wobei falsche Verbindungen dennoch nicht sicher ausgeschlossen sind.

Der Erfindung liegt die Aufgabe zugrunde, eine Anschlußvorrichtung der eingangs genannten Art bereitzustellen, mit der bei geringerem Fertigungsaufwand eine erhöhte Vertauschungssicherheit erzielt wird.

Diese Aufgabe wird mit den Merkmalen des Anspruchs 1 gelöst. Hiernach ist vorgesehen, daß das Gateway mit einer Zuordnungseinrichtung versehen ist, mit der das angeschlossene Bussystem bei beliebigem Anschluß identifizierbar und unabhängig von dem Anschluß mit seiner zugehörigen Funktion verknüpfbar ist. Mit diesen Maßnahmen ist der Ankopplung eines Bussystems an einem beliebigen der zur Verfügung stehenden Anschlüsse möglich. Die Zuordnung zu der Funktion des Bussystems erfolgt mittels der Zuordnungseinrichtung automatisch. Für alle Anschlüsse und Steckvorrichtungen der Bussysteme können die gleichen Verbindungselemente verwendet werden, die standardisiert sein können. Da beliebige Anschlüsse für die Ankopplung der Bussysteme verwendet werden können, ist auch eine Vertauschung der Verbindungen ausgeschlossen. Zudem können an dem Gateway beliebig viele Anschlüsse vorgesehen werden, wodurch die Flexibilität vergrößert wird.

Der einfache Aufbau wird dadurch begünstigt, daß die Identifikation und die Verknüpfung mittels eines Programms erfolgen.

Eine vorteilhafte Ausführung der Anschlußvorrichtung wird dadurch erhalten, daß die Bussysteme CAN-Busse sind, die mit Motorsteuergeräten und/oder Karosseriesteuergeräten und/oder Beleuchtungssteuergeräten eines Kraftfahrzeugs in Verbindung stehen und daß die Identifikation aufgrund von aus der laufenden oder beginnenden Kommunikation herausgefilterten Daten erfolgt. Ein geringer Aufwand wird weiterhin dadurch begünstigt, daß die physikalischen Schichten (physical layer) jedes Bussystems gleich sind oder jeder Anschluß an eine entsprechende physikalische Schicht anpaßbar ist.

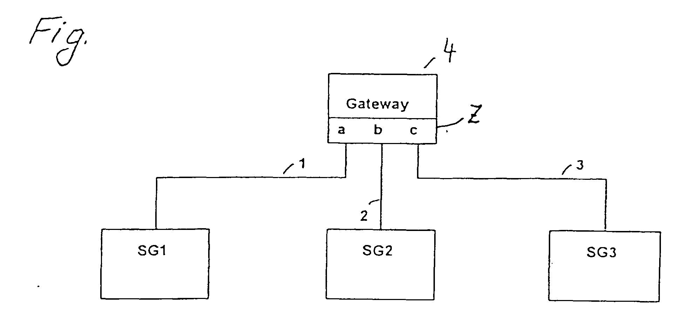

Die Erfindung wird nachfolgend anhand eines Ausführungsbeispiels unter Bezugnahme auf die Zeichnung näher erläutert. Die Figur zeigt in einem schematischen Blockschaltbild die Ankopplung verschiedener Steuergeräte SG1, SG2, SG3 über Busse bzw. Bussysteme 1,2,3 an Anschlüssen a,b,c eines Gateway 4, das allgemein einen Übergang zwischen mindestens zwei Kommunikationssystemen darstellt und beispielsweise als zentrales Steuerungsgerät ausgebildet sein kann.

Das Gateway 4 ist in seinem anschlusseitigen Eingangsbereich mit einer Zuordnungseinrichtung Z versehen, die derart programmiert ist, daß das jeweilige Bussystem unabhängig davon erkannt wird, an welchem Anschluß a,b,c es gerade angekoppelt ist. Die Identifikation des Bussystems erfolgt z. B. aufgrund von diesem eigenen Kennungen, die aus einer beginnenden oder laufenden Kommunikation herausgefiltert werden. Für den Bus 1,2,3, insbesondere einen CAN-Bus (Controller Area Network), wie er in Kraftfahrzeugen verwendet wird, existieren derartige Kennungen oder werden per Definition sichergestellt. Die Zuordnungseinrichtung verknüpft nach der Erkennung ebenfalls über Software den Bus mit seiner zugehörigen Funktion, so daß die Zuordnung von Bus und Funktion unabhängig von dem jeweils gewählten Anschluß a,b,c stets eindeutig ist.

Die derart aufgebaute Anschlußvorrichtung ermöglicht es, für alle Anschlüsse a,b,c gleiche, standardisierte Steckverbindungen zu verwenden und auch beliebig viele freie Steckvorrichtungen vorzusehen, so daß flexible Anschlußmöglichkeiten geboten werden, wobei die Anschlüsse beliebig vertauscht werden können, ohne daß sich die Funktion ändert. Dadurch wird die Anschlußvorrichtung kostengünstig und einfach bedienbar und kann günstig in einem Kraftfahrzeug verwendet werden, in dem CAN-Bussysteme für eine Motorelektronik, Karosserieelektronik, Beleuchtungselektronik und weitere elektronische Einrichtungen eingesetzt werden.

Die Zuordnungseinrichtung basiert auf identischen physikalischen Schichten bzw. Bitübertragungsschichten (physical layer), wobei diese Bitübertragungsschichten von vornherein identisch sind oder in der Zuordnungseinrichtung Z auf die entsprechende Bitübertragungsschicht angepaßt werden.

## Patentansprüche

1. Anschlußvorrichtung zum Ankoppeln mindestens zweier Bussysteme (1,2,3) an verschiedenen Anschlüssen (a,b,c) eines Gateways (4), wobei das Gateway (4) mit einer Zuordnungseinrichtung (Z) versehen ist, mit der das angeschlossene Bussystem bei beliebigem Anschluß (a, b, c) identifizierbar und unabhängig von dem Anschluß (a, b, c) mit seiner zugehörigen Funktion verknüpfbar ist, wobei Mittel enthalten sind, welche eine Identifikation des angeschlossenen Bussystems (1,2,3) und eine Verknüpfung des Bussystems (1, 2, 3) mit seiner zugehörigen Funktion anhand aus der beginnenden oder laufenden Kommunikation herausgefilterten Daten (Kennungen) durchführen, wobei die physikalische Schicht (physical layer) jedes Bussystems (1, 2, 3) gleich ist.

2. Anschlußvorrichtung nach Anspruch 1,**dadurch gekennzeichnet,daß** die Identifikation und die Verknüpfung mittels eines Programms erfolgen.

3. Anschlußvorrichtung nach Anspruch 1 oder 2, **dadurch gekennzeichnet, daß** die Bussysteme (1,2, 3) CAN-Busse sind, die mit Motorsteuergeräten (SG1) und/oder Karosseriesteuergeräten (SG2) und/oder Beleuchtungssteuergeräten (SG3) eines Kraftfahrzeugs in Verbindung stehen.

4. Anschlußvorrichtung nach einem der vorhergehenden Ansprüche, **dadurch gekennzeichnet, dass** jeder Anschluß (a, b, c) an eine entsprechende physikalische Schicht (physikal layer) anpaßbar ist.

## Claims

1. Connection apparatus for coupling at least two bus systems (1, 2, 3) to various connections (a, b, c) of a gateway (4), with the gateway (4) being provided with an assignment device (Z) using which the connected bus system can be identified for any connection (a, b, c) and can be linked to its associated function irrespective of the connection (a, b, c), with means being provided which identify the connected bus system (1, 2, 3) and link the bus system (1, 2, 3) to its associated function with reference to data (characteristics) which are filtered out from the communication process which is beginning or running, with the physical layer of each bus system (1, 2, 3) being identical.

2. Connection apparatus according to Claim 1, **characterized in that** identification and linking are performed by means of a program.

3. Connection apparatus according to Claim 1 or 2, **characterized in that** the bus systems (1, 2, 3) are CAN buses which are connected to engine controllers (SG1) and/or body controllers (SG2) and/or lighting controllers (SG3) of a motor vehicle.

4. Connection apparatus according to one of the preceding claims, **characterized in that** each connection (a, b, c) can be matched to a corresponding physical layer.

## Revendications

1. Dispositif de connexion pour coupler au moins deux systèmes de bus (1, 2, 3) à différentes connexions (a, b, c) d'une passerelle (gateway) (4), la passerelle (4) étant munie d'un système d'affectation (Z) qui permet d'identifier le système de bus connecté dans une connexion quelconque (a, b, c) et de l'associer à sa fonction correspondante indépendamment de la connexion (a, b, c), des moyens étant prévus pour exécuter une identification du système de bus connecté (1, 2, 3) et une association du système de bus (1, 2, 3) à sa fonction correspondante au moyen de données (identificateurs) filtrées à partir d'une communication commençant ou en cours, la couche physique (physical layer) de chaque système de bus (1, 2, 3) étant identique.

2. Dispositif de connexion selon la revendication 1,
**caractérisé en ce que**
l'identification et l'association s'effectuent au moyen d'un programme.

3. Dispositif de connexion selon la revendication 1 ou 2,
**caractérisé en ce que**
les systèmes de bus (1, 2, 3) sont des bus CAN reliés à des appareils de commande du moteur (SG1) et/ou à des appareils de commande de la carrosserie (SG2) et/ou à des appareils de commande d'éclairage (SG3) d'un véhicule automobile.

4. Dispositif de connexion selon l'une quelconque des revendications précédentes,
**caractérisé en ce que**
chaque connexion (a, b, c) peut être adaptée à une couche physique (physical layer) correspondante.
